Europäisches Patentamt

European Patent Office

Office européen des brevets

(11) Veröffentlichungsnummer: **0 315 129 B1**

# EUROPÄISCHE PATENTSCHRIFT

(45) Veröffentlichungstag der Patentschrift: **22.01.92**

(21) Anmeldenummer: **88118208.3**

(22) Anmeldetag: **02.11.88**

(51) Int. Cl.⁵: **B65G 21/20**

(54) **Vorrichtung zum Einteilen von einspurig auf einem Förderer tranportierten Gefässen.**

(30) Priorität: **04.11.87 DE 8714646 U**

(43) Veröffentlichungstag der Anmeldung:
**10.05.89 Patentblatt 89/19**

(45) Bekanntmachung des Hinweises auf die
Patenterteilung:
**22.01.92 Patentblatt 92/04**

(84) Benannte Vertragsstaaten:
**DE ES FR GB IT**

(56) Entgegenhaltungen:
**DE-A- 3 425 516**
**US-A- 2 156 020**
**US-A- 3 527 336**

(73) Patentinhaber: **Kronseder, Hermann**
**Regensburger Strasse 42**
**W-8404 Wörth/Donau(DE)**

(72) Erfinder: **Kronseder, Hermann**
**Regensburger Strasse 42**
**W-8404 Wörth/Donau(DE)**

**Beschreibung**

Die Neuerung bezieht sich auf eine Vorrichtung zum Einteilen von einspurig auf einem Förderer transportierten Gefäßen gemäß dem Oberbegriff des Anspruchs 1.

Vorrichtungen nach oben genannter Art werden hauptsächlich in Gefäßbehandlungsmaschinen verschiedenster Ausführung eingesetzt, mit der Aufgabe, die einspurig antransportierten Gefäße auf den entsprechenden Teilungsabstand der zugehörigen Maschine zu bringen. Hierfür wird gewöhnlich eine Einteilschnecke verwendet, deren Teilung im letzten Schneckengang mit der Maschinenteilung übereinstimmt. Da in der Regel Gefäßbehandlungsmaschinen zur Verarbeitung von Gefäßen unterschiedlicher Größe und Form ausgelegt sind, muß demnach auch die Vorrichtung zum Einteilen der Gefäße auf deren Abmessungen und Formen einstellbar sein. Zusätzlich müssen die Gefäße in der der Maschine vorgeschalteten Vorrichtung auf eine für alle Gefäße einheitliche, durch die nachfolgende Gefäßbehandlungsmaschine vorgegebene Mündungsmittelpunktsbahn ausgerichtet werden, um von den Transportelementen, wie Einlaufstern, Drehtisch usw., der Maschine richtig erfaßt werden zu können.

Dies geschieht üblicherweise dadurch, daß das der Einteilschnecke gegenüberliegende Geländer im Bereich vor der Einteilschnecke entsprechend der Gefäßbreite querverschoben wird, während der der Einteilschnecke unmittelbar gegenüberliegende Geländerabschnitt zusätzlich auch winkelverstellbar sein muß, da in diesem Bereich die Ausrichtung der Gefäße auf die durch die Maschine vorgegebene Mündungsmittelpunktsbahn erfolgt, z.B. durch Verwendung einer Einteilschnecke mit zunehmendem Kerndurchmesser oder einer winkelverstellbaren Einteilschnecke mit konstantem Kerndurchmesser.

In bekannten Vorrichtungen dieser Art wurden bisher die auf Führungsstangen mit Klemmstücken oder mittels Langlochführungen mit Schraubverbindungen gelagerten Geländer beim Umrüsten durch Einsetzen von Probeflaschen der neuen Größe in den ersten und letzten Gewindegang der Einteilschnecke eingestellt. Diese Methode beansprucht relativ viel Zeit, da das Bedienungspersonal zahlreiche Klemmverbindungen einzeln von Hand lösen, die genannten Geländerabschnitte anhand der Probeflaschen neu einstellen und anschließend wieder festklemmen muß. Speziell bei Etikettiermaschinen ist diese Arbeit besonders umständlich und zeitraubend, da das Führungsgeländer am Einlauf wegen des dahinter auf dem Maschinentisch angeordneten Etikettieraggregats schlecht zugänglich ist. Zudem ist die beschriebene Einstellmethode mittels Probeflaschen verhältnismäßig ungenau, speziell bei flexiblen Einteilschnecken, wie z.B. konturierten Bürstenschnecken oder auch bei flexiblen Gefäßen (PET-Flaschen). Hier kann es vorkommen, daß die Geländerabschnitte etwas zu eng eingestellt werden, wodurch der Gefäßstrom unnötig gebremst und zum Teil durch klemmende Gefäße aufgehalten wird.

Der Neuerung liegt die Aufgabe zugrunde, eine Einteilvorrichtung zu schaffen, die eine schnelle, bequeme und zugleich genaue Umstellung von einer Gefäßgröße oder -form auf eine andere ermöglicht.

Diese Aufgabe wird durch die im Anspruch 1 angegebenen kennzeichnenden Merkmale gelöst.

Kernpunkt der neuerungsgemäßen Vorrichtung sind somit verstellbare Anschläge, die jeweils exakt die gewünschte Position des Führungsgeländers festlegen. Im Falle der Umstellung sind vorteilhafterweise keine Probeflaschen mehr erforderlich, da an deren Stelle verstellbare Anschläge mit mehreren Anschlagflächen die Positionen des Führungsgeländers bestimmen. Dadurch, daß zwei in Transportrichtung mit Abstand - vorzugsweise beidseitig von der Mitte des Führungsgeländers - angeordnete Anschläge vorgesehen sind, ist eine stabile und genaue Lage des Führungsgeländers auch bei unterschiedlichen Winkelstellungen gewährleistet.

Eine Schnellverstellung der Anschläge wird gemäß einer Weiterbildung der Neuerung auf einfache Weise durch einen mit einem Rastelement ausgestatteten Grundkörper ermöglicht, auf dem die eigentlichen Anschlagkörper entsprechend den Rastabständen einstellbar befestigt sind. Einstellbar heißt, daß der für jede Gefäßgröße erforderliche Abstand der Anschlagkörper vom Grundkörper einmal unter Berücksichtigung der bekannten Gefäßtoleranzen einjustiert und gesichert wird. Später im Betrieb wird dann nur noch der verstellbare Grundkörper in die der Gefäßgröße entsprechende, z. B. durch eine Farbmarkierung gekennzeichnete, Raststellung gebracht.

Zur Einstellung von sich sowohl in Abstand als auch Winkelstellung unterscheidenden Positionen des Führungsgeländers sind mindestens zwei gleichzeitig wirkende, voneinander in Transportrichtung beabstandete Anschläge erforderlich. Es ist deshalb einer Weiterbildung der Neuerung entsprechend vorteilhaft, alle Anschlagkörper auf nur einem gemeinsamen Grundkörper in Transportrichtung derart paarweise voneinander beabstandet anzuordnen, daß mit nur einer Verstellbewegung gleichzeitig die beiden jeweils erforderlichen Anschlagkörper in Position gebracht werden. Dies läßt sich durch eine am Gehäuse des Förderers horizontal verschiebbar gelagerte Leiste realisieren, die entsprechend der Anzahl der zu verarbeitenden Gefäßgrößen ebenso viele jeweils gleich weit voneinander beabstandete Anschlagkörper in Form von Gewindebolzenpaaren trägt, die z. B. durch Muttern gesichert ihre Einstellung beibehalten.

Eine besonders schnelle und praktische Handhabung ergibt sich, wenn diese Leiste mit den Anschlagkörpern auf der Vorderseite - dies is üblicherweise die der Einteilschnecke zugewandte Seite - des Förderbands gelagert ist, weil dadurch alle erforderlichen Handgriffe zur Umstellung ausschließlich von vorne bequem vornehmbar sind.

Es wäre auch eine Anordnung der Anschlagkörper auf der Rückseite des Förderers möglich, wozu allerdings ein Bedienungsgriff durch das Gehäuse hindurch auf die Vorderseite verlegt werden müßte. Eine solche Anordnung wäre z. B. dann sinnvoll, wenn der das Führungsgeländer tragende, parallel zur Förderebene verschiebbar im Gehäuse des Förderers gelagerte Schlitten nur durch eine einzige Stange mit nicht rundem Querschnitt gebildet wird, da in diesem Fall die auf der Rückseite angeordneten Anschläge unmittelbar auf das Führungsgeländer bzw. die daran angeordneten Teile einwirken können.

Bei einer neuerungsgemäßen Ausführung sind die Anschlagkörper auf der Vorderseite im Verschiebeweg des aus zwei parallelen Stangen bestehenden Schlittens angeordnet. Die beiden unterhalb der Förderebene im Gehäuse des Förderers in Gleitlagern geführten Stangen tragen auf ihren zur Vorderseite zeigenden Enden jeweils eine Anschlagplatte, die mit den Anschlagkörpern zusammenwirkt.

Durch geeignete Halteelemente kann dann das Geländer im Betrieb unverrückbar an den Anschlägen gehalten werden. Hierfür eignet sich besonders günstig eine Gewindespindel, die einerseits vorteilhafterweise zum Verstellen des Schlittens verwendet werden kann und andererseits zugleich durch die Selbsthemmung des Gewindes die gewünschte Stellung beibehält. Sinnvollerweise kann die Gewindespindel in etwa mittig zwischen den das Führungsgeländer auf zwei senkrechten Bolzen tragenden Stangen im Gehäuse des Förderers derart gelagert werden, daß eine Verstellung des Führungsgeländers von der Vorderseite der Maschine aus erfolgen kann. Die in diesem Fall als Betätigungs- und Halteelement dienende Gewindespindel kann entweder direkt am Führungsgeländer angreifen oder durch eine die beiden Stangen des Schlittens verbindende Quertraverse mittelbar auf das Führungsgeländer wirken. Für die Funktion ist es dabei unerheblich, auf welcher Seite des Förderers sich die Quertraverse befindet.

Zur Winkeleinstellung des unmittelbar gegenüber der Einteilschnecke liegenden Abschnitts des Führungsgeländers muß es den beiden Stangen des Schlittens möglich sein, verschieden große Stellwege zurückzulegen, was z. B. durch Langlöcher in der Lagerung des Führungsgeländers oder den Lagern der Quertraverse ermöglicht wird. Hierdurch kann ein Längenausgleich zwischen den Aufhängungspunkten erfolgen, der bei unterschiedlichen Winkelstellungen notwendig ist. Eine andere Möglichkeit besteht darin, die beiden Stangen starr miteinander zu verbinden und in einer zur Förderebene parallelen Ebene leicht kippbar anzuordnen, z. B. durch entsprechendes Spiel in den Lagerstellen.

Wird besonderer Wert auf sehr kurze Umrüstzeiten gelegt, kann anstelle einer Gewindespindel zur Verstellung des Führungsgeländers auch ein am Gehäuse des Förderers drehbar gelagerter Schwenkhebel verwendet werden, der durch eine Bohrung eines Drehbolzens gleitet, der wiederum mit einer Schubstange verbunden ist. Die Schubstange ihrerseits steht über ein Drehgelenk mit dem Führungsgeländer oder der Quertraverse in Verbindung. Hierzu sind allerdings zusätzliche separate Halteelemente vorzusehen, die das Führungsgeländer zuverlässig in der eingestellten Anschlagsposition festhalten. Dafür sind beispielsweise Federn oder Klemmeinrichtungen geeignet, die unmittelbar auf die Schubstange wirken.

Moderne Gefäßbehandlungsmaschinen verfügen in der Regel auch über eine vor der Einteilvorrichtung angeordnete, im Bedarfsfalle betätigbare Einlaufsperre, die beispielsweise bei Störungen den Gefäßzustrom stoppen kann. Eine Einlaufsperre dieser Art, wie z. B. ein frei mitlaufender Stern, der verriegelbar ist, kann im Gehäuse des winkelverstellbaren Führungsgeländers integriert werden.

Bei Ausführungen mit einem gedämpften Sperrstern ist es allerdings sinnvoller, diesen in einem separaten Gehäuse im Bereich vor der Einteilschnecke auf der ihr gegenüberliegenden Seite des Förderers anzuordnen, da der gedämpfte Sperrstern einen Mindesthub zur schonenden Gefäßabbremsung benötigt, den er allerdings vor der Einteilschnecke zurücklegen muß. Der Sperrstern kann aus diesem Grund und wegen der Winkelverstellung nicht mehr im unmittelbar der Einteilschnecke gegenüberliegenden Führungsgeländer integriert werden. Das Sperrsterngehäuse kann hierzu unabhängig vom nachfolgenden winkelverstellbaren Führungsgeländer auf einem eigenen Schlitten befestigt werden, der für Umstellungen nur parallel verschiebbar sein muß.

Aber auch bei einer reinen Parallelverstellung des Schlittens ist es entsprechend der Neuerung günstig, für jede Stellung jeweils zwei in Transportrichtung voneinander beabstandet auf einem gemeinsamen Grundkörper befestigte Anschlagkörper vorzusehen. Auf diese Weise ist eine genaue Parallelstellung trotz der vorhandenen Toleranzen in den Führungen und Gelenken gewährleistet.

Denkbar ist auch eine Ausführung, bei der das Sperrsterngehäuse und das nur querverstellbare Führungsgeländer über ein Drehgelenk mit dem winkelverstellbaren Führungsgeländer verbunden ist. Diese Lösung erlaubt einen für beide Führungsgeländer gemeinsamen Schlitten mit insgesamt nur zwei Stangen, wobei das Führungsgeländer mit dem Sperrsterngehäuse starr, d. h. verdrehfest, mit einer einen nicht runden Querschnitt aufweisenden Stange verbunden ist, während das andere Führungsgeländer über ein Langloch mit der zweiten Stange (z. B. Gewindespindel) zusammenwirkt, so daß das winkelverstellbare Führungsgeländer um das Drehgelenk am Sperrsterngehäuse herum verschwenkbar ist.

Da Einteilschnecken mit konstantem Kerndurchmesser nicht bei allen Umstellungen zwangsläufig ausgetauscht werden müssen, z. B. bei runden Gefäßen mit nur geringfügig unterschiedlichem Durchmesser oder Formflaschen mit unterschiedlicher Breite, war es schon bisher möglich, die Einteilschnecke um die senkrechtstehende Achse ihres Kegelradgetriebes zu verschwenken. Zur Erzielung der korrekten Mündungsmittelpunktsbahn mußte aber die Einteilschnecke bisher jedes Mal von Hand neu einjustiert werden.

Besonders zeitsparend ist deshalb eine gleichzeitige Verstellung der Anschläge für die Einteilschnecke und das Führungsgeländer, die neuerungsgemäß durch einen gemeinsamen Grundkörper für die erforderlichen Anschlagkörper realisiert werden kann. Hierzu ist an dem der Antriebseite gegenüberliegende Ende der Einteilschnecke ein L-förmiges Anschlaggegenstück befestigt, das einerseits die Schneckenlagerung aufnimmt und andererseits mit dem zugehörigen Anschlagkörper zusammenwirkt. Durch einen am Förderer gelagerten Paßstift und eine entsprechende Bohrung im Anschlaggegenstück wird zugleich auch die richtige Höhe der Einteilschnecke gewährleistet. Das Andrücken des L-förmigen Anschlaggegenstücks kann durch einen schwenkbar am Gehäuse des Förderers gelagerten Exzenter erfolgen.

Im nachstehenden werden Ausführungsbeispiele der Neuerung anhand der Zeichnungen beschrieben. Es zeigen:

Figur 1     Draufsicht auf die Einteilvorrichtung mit einem im Führungsgeländer integrierten Sperrstern

Figur 2     Längsschnitt durch das Gehäuse des Förderers nach Figur 1 mit einer anderen Betätigungseinrichtung

Figur 3     Längsschnitt durch das Gehäuse des Förderers nach Figur 1

Figur 4     Vorderansicht der Vorrichtung nach Figur 1 ohne Einteilschnecke und ohne Führungsgeländer

Figur 5     Schnitt A-B nach Figur 4 mit schematisch angedeutetem Führungsgeländer, aber ohne Einteilschnecke

Figur 6     Schnitt C-D nach Figur 4

Figur 7     Vorderansicht einer Einteilvorrichtung mit zusätzlichen Anschlägen für die Einteilschnecke

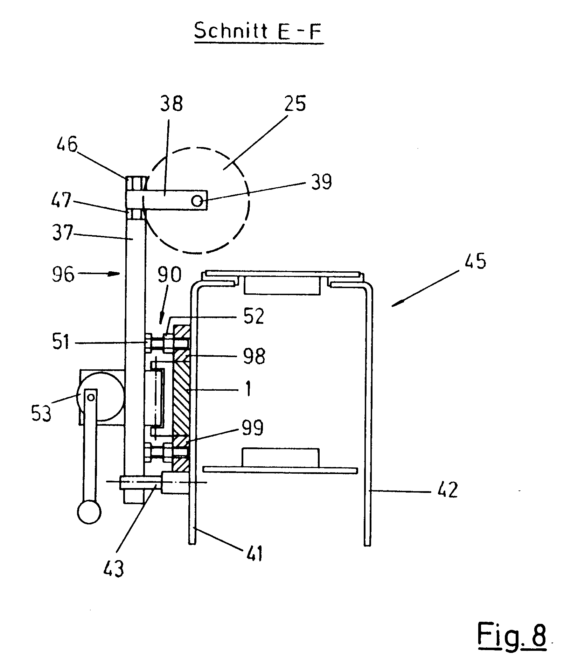

Figur 8     Schnitt E-F nach Figur 7

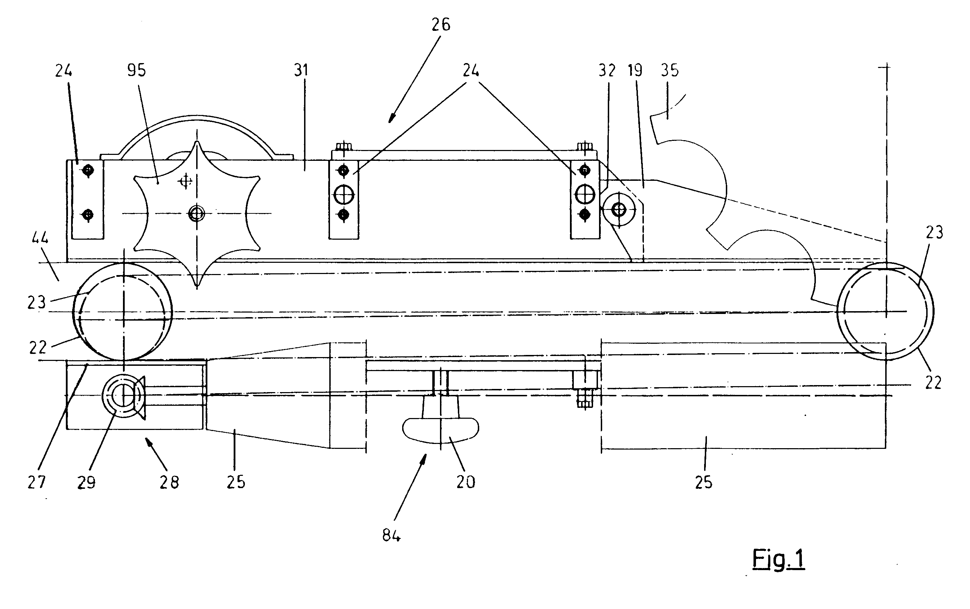

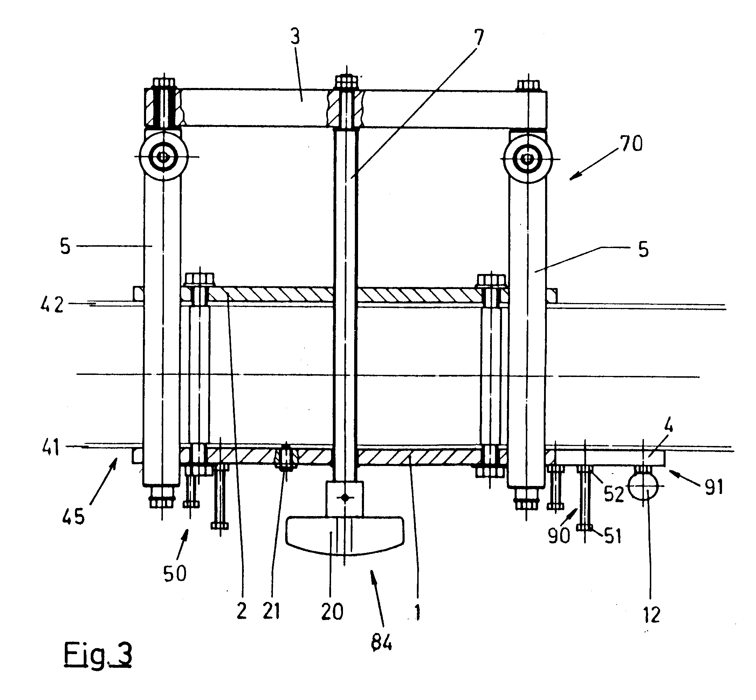

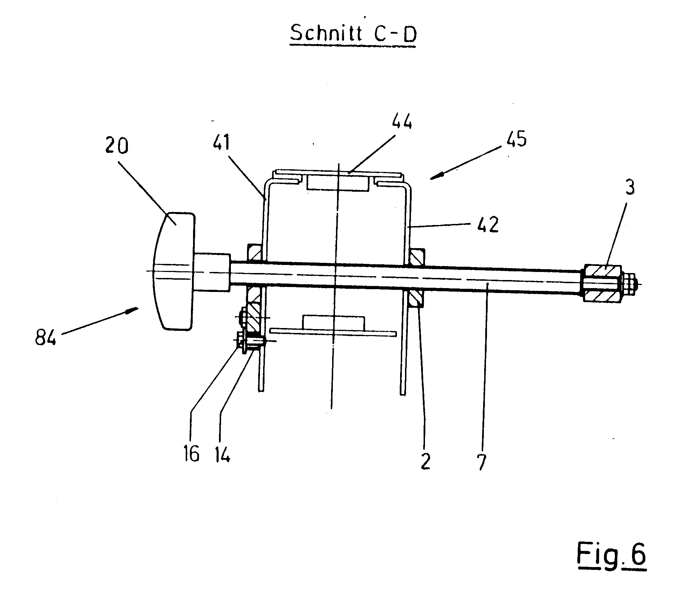

Die in Figur 1 dargestellte Draufsicht zeigt eine Einteilvorrichtung mit einer schematisch angedeuteten Einteilschnecke 25, ein ihr unmittelbar gegenüberliegendes Führungsgeländer 26 mit einem integrierten Sperrstern 95 und einem ebenfalls nur teilweise dargestellten Einlaufstern 35 der nächstfolgenden Gefäßbehandlungsmaschine. Alle Gefäße, gleich welcher Größe und Form, werden durch das Förderband 44 immer entlang dem sich stets in unverändert gleicher Position befindenden Geländer 27 der Einteilschnecke 25 zugeführt. Dies bedeutet, daß z. B. bei zwei runden Flaschen mit unterschiedlichen Durchmessern die kleinere 23 mit ihrem Mündungsmittelpunkt um die halbe Durchmesserdifferenz näher am festen Geländer 27 liegt, als der Mündungsmittelpunkt der im Durchmesser größeren Flasche 22. Da aber die kleinere Flasche 23 bei der Übergabe an den Einlaufstern 35 die gleiche Mündungsmittelpunktsbahn einnehmen muß, wie die größere Flasche 22, muß sowohl die mit einem konstanten Kerndurchmesser versehene Einteilschnecke 25, als auch das ihr unmittelbar gegenüberliegende Führungsgeländer 26 winkelverstellbar sein, so wie dies durch die strichpunktierten Linien der Mündungsmittelpunktsbahn, der Gefäßaußenkanten und der Mittelachse der Einteilschnecke 25 gezeigt wird. Im letzten Schneckengang, d. h. bei der Übergabe an den Einlaufstern 35 liegt der Mündungsmittelpunkt der kleineren Flasche 23 auf der durch die Gefäßbehandlungsmaschine vorgegebenen Mündungsmittelpunktsbahn. Dazu muß das Führungsgeländer 26 nicht nur in seiner Winkelstellung in bezug auf die Transportrichtung verstellt werden, sondern es muß gleichzeitig auch um die halbe Durchmesserdifferenz der beiden Flaschen parallel verschoben werden. Die Verschwenkung der Einteilschnecke 25 erfolgt um die Achse des senkrecht gelagerten Kegelrads 29, das über weitere Antriebselemente mit dem Hauptantrieb der Gefäßbehandlungsmaschine verbunden ist. Unterhalb der Einteilschnecke 25 ist eine Betätigungseinrichtung 84 zur Verstellung des Führungsgeländers 26 angeordnet. Der Aufbau der Betätigungseinrichtung 84 ist in den Figuren 3 und 6 besser zu erkennen. Das Führungsgeländer 26 ist zweiteilig aufgebaut, d. h. es besteht aus zwei horizontal übereinander angeordneten Führungsplatten 30 und 31, die über Distanzklötze 24 voneinander beabstandet mittels Schrauben miteinander verspannt sind. Zwischen diesen beiden Führungsplatten 30 und 31 ist außerdem der Sperrstern 95 drehbar gelagert, der sich im Normalfall, angetrieben durch den vorbeilaufenden Gefäßstrom, frei dreht und bei Bedarf durch eine gesteuerte Verriegelungseinrichtung sperren läßt. In Figur 1 ist das Führungsgeländer 26 ohne die obere Führungsplatte 30 zwecks besserer Übersicht dargestellt. Da in der Regel neben der Einteilschnecke 25 bei Umstellungen auch der ebenfalls zweiteilig aufgebaute Einlaufstern 35 ausgetauscht werden muß, ist der aus nur einer Führungsplatte bestehende Geländerfortsatz 19 schwenkbar im zweiteiligen Führungsgehäuse 26 mittig zwischen den Führungsplatten 30 und 31 gelagert. Dies ermöglicht ein Herausschwenken des Geländerfortsatzes 19 in Richtung der Einteilschnecke 25, so daß der Einlaufstern 25 problemlos nach oben herausgehoben werden kann. Die Arbeitsstellung des Geländerfortsatzes 19 ist durch eine sich an einem der Distanzklötze 24 abstützende Anschlagfläche 32 festgelegt.

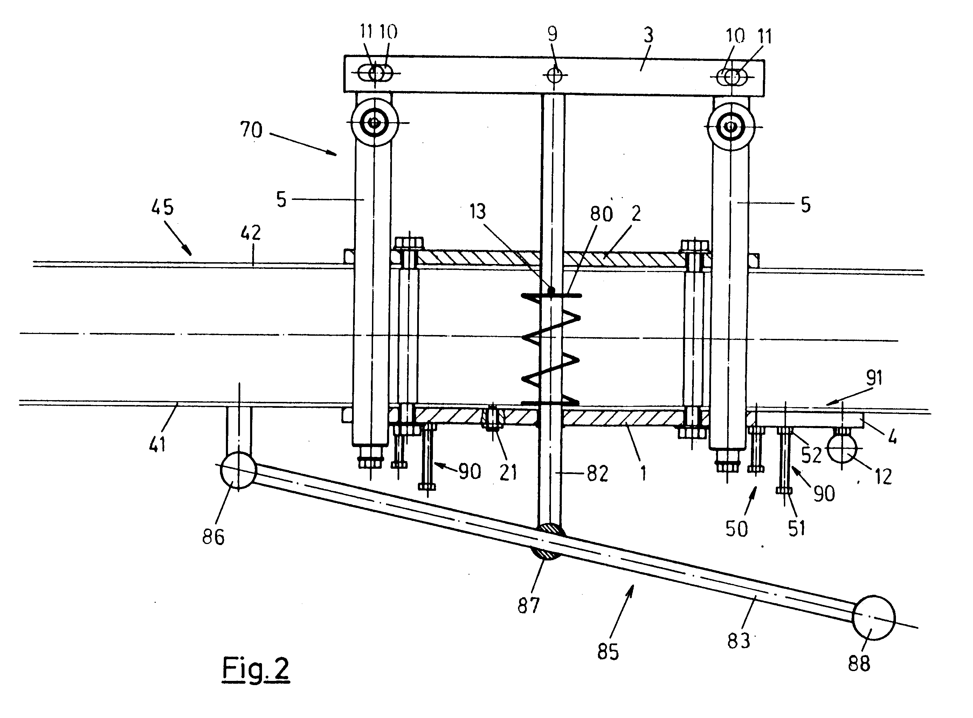

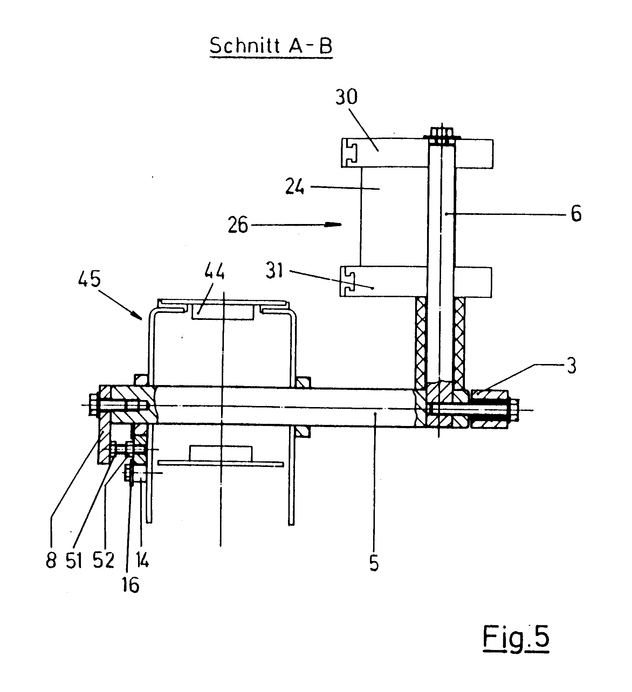

Figur 2 zeigt ein Ausführungsbeispiel eines Schlittens, der das nicht dargestellte Führungsgeländer 26 trägt. Der horizontal im Gehäuse des Förderers 45 gelagerte Schlitten 70 besteht im wesentlichen aus den beiden parallelen Stangen 5, die zusammen mit der Schubstange 82 in passenden Bohrungen der beiden Seitenwände 41 und 42 des Förderers 45 gleitend geführt sind. In diesem Bereich ist das Gehäuse durch die beiden Lagerplatten 1 und 2 entsprechend verstärkt. Die beiden Stangen 5 und die Schubstange 82 stehen über eine Quertraverse 3 miteinander in Verbindung, wobei das hintere Ende der Schubstange 82 durch ein Drehgelenk 9 mit der Quertraverse 3 zusammenwirkt, während für die beiden Zapfen 11 der Stangen 5 passende Langlöcher 10 vorgesehen sind. Auf diese Weise ist die erforderliche Schrägstellung des Führungsgeländers 26 möglich. Die Betätigung erfolgt über einen an der Vorderseite des Förderers 45 angeordneten Schwenkhebel 83, der an einem Ende durch ein Drehgelenk 86 in der Horizontalebene schwenkbar an der vorderen Seitenwand 41 des Förderers 45 angelenkt ist. Der Schwenkhebel 83 wiederum gleitet in der Bohrung eines am vorderen Ende der Schubstange 82 angeordneten Drehbolzens 87, über den der Kraftschluß zur Quertraverse 3 hergestellt wird. Der mit einem Handgriff 88 ausgestattete Schwenkhebel 83 erlaubt durch Anziehen entgegen dem Widerstand der auf der Schubstange 82 befindlichen Andrückfeder 80 ein Abheben der an den vorderen Enden der Stangen 5 befestigten Anschlagplatten 8 von den zugehörigen Anschlagkörpern 90 (siehe Figur 5). Die jeweils paarweise im gleichen Abstand zueinander in Transportrichtung auf einer gemeinsamen, horizontal verschiebbar gelagerten Leiste 4 befestigten Anschlagkörper 90 werden durch Gewindebolzen 51 gebildet, die in ihrem Abstand zur Leiste 4 entsprechend den geforderten Anschlagspositionen eingestellt und durch Kontermuttern 52 gesichert werden können. Diese Einstellung erfolgt gewöhnlich unter Berücksichtigung der Gefäßtoleranzen bei der Montage der Einteilvorrichtung. Die mit einem Griff 12 ausgestattete Leiste 4 läßt sich nach dem Abheben der Anschlagplatten 8 durch die Betätigungseinrichtung 85 in verschiedene Stellungen bringen, die durch ein in die Leiste 4 integriertes Rastelement 21 vorgegeben werden. Das Rastelement 21 kann z. B. aus einer federbelasteten Kugel bestehen, die mit passenden Einformungen in der vorderen Seitenwand 41 zusammenwirkt. Nachdem das erforderliche Anschlagkörperpaar 90 durch Verschieben der Leiste 4 in die exakte Stellung unterhalb der Stangen 5 gebracht worden ist, kann die Betätigungseinrichtung 85 losgelassen werden, wodurch die Andrückfeder 80 für ein zuverlässiges Anliegen der Andrückplatten 8 an den Köpfen der Gewindebolzen 51 sorgt. Dazu liegt das eine Ende der Andrückfeder 80 an der Innenseite der vorderen Seitenwand 41 an, während sich das andere Ende auf einem in der Schubstange 82 befestigten Spannstift 13 abstützt.

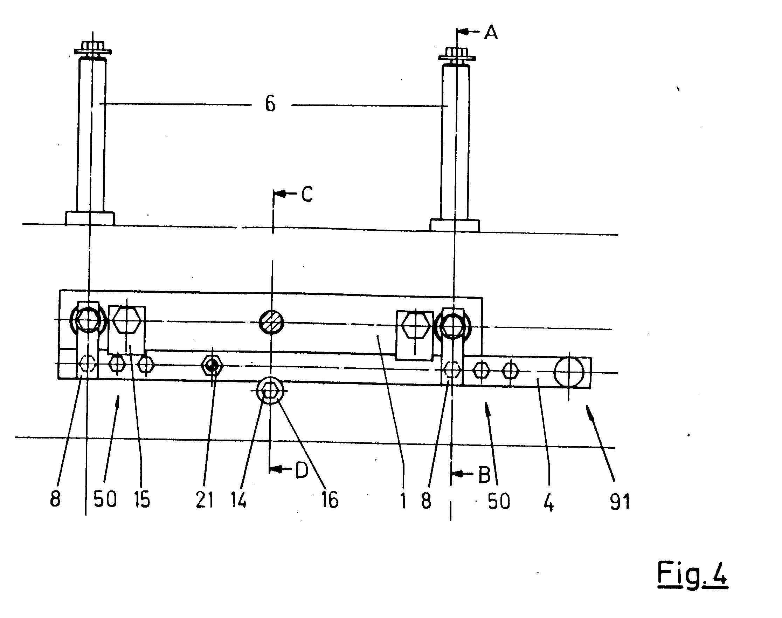

Die Führung der Leiste 4 erfolgt entlang der Unterkante der vorderen Lagerplatte 1 mit Hilfe eines Stützbolzens 14 und zweier auf der vorderen Lagerplatte 1 aufgeschraubten Halteplatten 15, die die Leiste 4 mit etwas Spiel übergreifen. Der mit einer die Leiste 4 ebenfalls mit Spiel übergreifenden Beilagscheibe 16 ausgestattete Stützbolzen 14 gewährleistet zusammen mit den beiden Halteplatten 15 eine genaue Schiebeführung der Leiste 4 (siehe Figur 4).

Die in Figur 3 dargestellte Ausführung unterscheidet sich gegenüber der in Figur 2 gezeigten in erster Linie durch die Betätigungseinrichtung 84, die in diesem Fall durch eine mit einem Handrad 20 versehene Gewindespindel 7 gebildet wird. Die mittig zwischen den beiden Stangen 5 im Gehäuse des Förderers 45 angeordnete Gewindespindel 7 wird durch eine Durchgangsbohrung in der vorderen Lagerplatte 1 und einer Gewindebohrung in der hinteren Lagerplatte 2 geführt. Auf der Rückseite des Förderers 45 sind die beiden Stangen 5 und die Gewindespindel 7 über eine drei Durchgangsbohrungen aufweisende Quertraverse 3 verbunden. Da in der Praxis die Schrägstellung des Führungsgeländers 26 nur wenige Winkelgrade beträgt, genügt es in den Schraubverbindungen zwischen der Quertraverse 3 und den Stangen 5 bzw. der Gewindespindel 7 etwas Lagerspiel vorzusehen. Dies kann zum einen durch etwas größere Durchmesser der Durchgangsbohrungen in der Quertraverse 3 und durch ausreichendes Axialspiel, z. B. durch überstehende Lagerbuchsen oder Schraubverbindungen mit Kontermuttern erreicht werden. Die Schraubverbindungen zwischen den Stangen 5 und der Quertraverse 3 übernehmen damit die Funktion der Langlöcher 10 der in Figur 2 gezeigten Ausführung. Die Ausbildung der Anschläge 50 ist mit denen in der Figur 2 gezeigten identisch. Gegenüber der vorher beschriebenen Vorrichtung ist die Betätigungsvorrichtung 84 einfacher im Aufbau und dementsprechend billiger in der Herstellung. Ausschlaggebend dafür ist der Umstand, daß die Gewindespindel 7 aufgrund ihrer Selbsthemmung sowohl als Betätigungs- als auch Halteelement wirkt. Es ist keine weitere separate Halte- oder Klemmeinrichtung notwendig.

Bei einer Umstellung muß die Gewindespindel zum Abheben der Anschlagplatten 8 lediglich gelöst und nach dem Verstellen der Leiste 4 wieder angezogen werden.

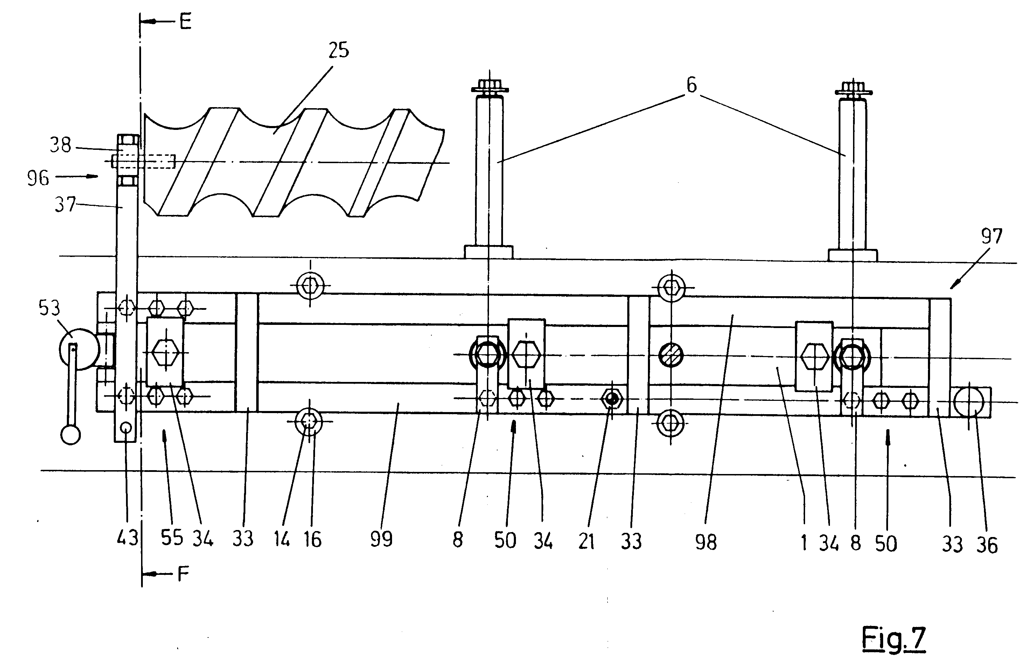

Da bei Umstellungen nicht in allen Fällen auch die Einteilschnecke 25 ausgetauscht werden muß, sondern sie nach einer Korrektur ihrer Winkeleinstellung in der Vorrichtung verbleiben kann, ist es entsprechend der in Figur 7 dargestellten Ausführung vorteilhaft, wenn der Grundkörper 97 außer den Anschlägen 50 noch weitere Anschläge 55 für die Einteilschnecke 25 trägt. Dazu besteht der Grundkörper 97 aus zwei parallel oberhalb und unterhalb der verlängerten Lagerplatte 1 an der vorderen Seitenwand 41 verschiebbar gelagerten Leisten 98 und 99, die über Querleisten 33 starr miteinander verbunden sind. Die für die Winkelstellungen der Einteilschnecke 25 vorgesehenen Anschläge 55 werden durch jeweils zwei senkrecht übereinander mit gleichem Abstand zu den Leisten 98 und 99 angeordnete Anschlagkörper 90 gebildet, die aus den Gewindebolzen 51 und den Kontermuttern 52 bestehen. Die obere Leiste 98 weist im Gegensatz zur unteren Leiste 99 nur im Bereich des schwenkbaren Endes der Einteilschnecke 25 Anschlagkörper 90 auf. Zur Führung der Leisten 98 und 99 sind auf jeder Seite zwei Stützbolzen 14 in der vorderen Seitenwand 41 eingeschraubt, die mit ihren Beilagscheiben 16, zusammen mit den Halteplatten 34, die beiden Leisten mit etwas Spiel übergreifen, so daß der gesamte Grundkörper 97 mit nur einem Handgriff 36 entlang der oberen und unteren Kante der Lagerplatte 1 in die verschiedenen Raststellungen verschoben werden kann.

Das mit dem schwenkbaren Ende der Einteilschnecke 25 verbundene L-förmige Anschlaggegenstück 96 besteht im wesentlichen aus einer senkrecht stehenden Vierkantstange 37 und einem auf ihrem oberen Ende drehbar befestigten Lagerklotz 38 (für den Lagerbolzen 39 der Einteilschnecke 25). Die Vierkantstange 37 weist in ihrem unteren Bereich ein Loch für einen Paßstift 43 auf, der beim Aufliegen der Vierkantstange 37 auf den beiden übereinander stehenden Gewindebolzen 51 die exakte Höhe der Einteilschnecke 25 gewährleistet. Aufgrund der verschiedenen Winkelstellungen der Einteilschnecke 25 ist die Vierkantstange 37 mittels einer Schraube 46 und einer Kontermutter 47 drehbar mit dem Lagerklotz 38 verbunden, so daß sie sich unabhängig von der Winkelstellung stets plan auf die Kopfflächen der Gewindebolzen 51 durch den schwenkbar gelagerten Exzenter 53 andrücken läßt.

Zur Umstellung muß lediglich der Exzenter 53 gelöst und ebenso wie die Einteilschnecke 25 zur Seite geschwenkt werden (siehe Figur 7). Danach wird der Schlitten 70 über seine Betätigungseinrichtung von den Anschlägen 50 abgehoben und der Grundkörper 97 zur Einstellung der neuen Position verschoben. In umgekehrter Reihenfolge erfolgt wiederum das Heranfahren des Schlittens 70 und das Anziehen des Exzenters 53. Durch diese Vorrichtung entfällt die bisher umständlich von Hand vorgenommene Einjustierung der Einteilschnecke 25. Mit der vorbeschriebenen Einrichtung lassen sich erforderlichenfalls auch verschiedene Positionen unterschiedlicher, austauschbarer Einteilschnecken mechanisch speichern.

**Patentansprüche**

1. Vorrichtung zum Einteilen von einspurig auf einem Förderer transportierten Gefäßen mit einer Einteilschnecke und einem auf der der Einteilschnecke gegenüberliegenden Seite des Förderers angeordneten Führungsgeländer, das bezüglich der Transportrichtung sowohl quer- als auch winkelverstellbar ist, dadurch gekennzeichnet, daß die bestimmten Gefäßgrößen zugeordneten unterschiedlichen Quer- und Winkelpositionen des Führungsgeländers (26) durch zwei in Transportrichtung mit Abstand verstellbar angeordnete Anschläge (50) mit mehreren Anschlagflächen (90) festgelegt sind.

2. Vorrichtung nach Anspruch 1, dadurch gekennzeichnet, daß das Führungsgeländer (26) auf einem Schlitten (70) befestigt ist, der unterhalb der Förderebene parallel zu dieser gelagert ist und dessen Quer- und Winkelpositionen durch die verstellbaren Anschläge (50) bestimmt und durch Halteelemente (7, 80) feststellbar sind.

3. Vorrichtung nach Anspruch 2, dadurch gekennzeichnet, daß der Schlitten (70) zwei parallele Stangen (5) aufweist, die im Gehäuse (41, 42) des Förderers (45) geführt sind.

4. Vorrichtung nach Anspruch 3, dadurch gekennzeichnet, daß das Führungsgeländer (26) über Drehgelenke (6) mit den beiden Stangen (5) verbunden ist, die unabhängig voneinander quer zur Transportrichtung verschiebbar im Gehäuse (41, 42) des Förderers (45) geführt sind.

5. Vorrichtung nach Anspruch 3, dadurch gekennzeichnet, daß die beiden Stangen (5) durch eine Quertraverse (3) miteinander verbunden und quer zur Transportrichtung verschiebbar sowie ggf. in einer zur Förderebene parallelen Ebene kippbar im Gehäuse (41, 42) des Förderers (45) geführt sind.

6. Vorrichtung nach einem der Ansprüche 1 bis 5, dadurch gekennzeichnet, daß zum Verstellen des Führungsgeländers (26) dieses mit einer auf der Seite der Einteilschnecke (25) angeordneten Betätigungseinrichtung (84, 85) in Verbindung steht.

7. Vorrichtung nach Anspruch 5 und 6, dadurch gekennzeichnet, daß Teile (7, 82) der Betätigungseinrichtung (84, 85) an der Quertraverse (3) angreifen.

8. Vorrichtung nach den Ansprüchen 2, 6 oder 7, dadurch gekennzeichnet, daß das Halteelement und die Betätigungseinrichtung (84) durch eine im Gehäuse (41, 42) des Förderers (45) gelagerte Gewindespindel (7) gebildet wird, die mit der Quertraverse (3) verbunden ist und auf der der Einteilschnecke (25) zugewandten Seite mit einem Handrad (20) versehen ist.

9. Vorrichtung nach einem der Ansprüche 6 oder 7, dadurch gekennzeichnet, daß die Betätigungseinrichtung (85) aus einer im Gehäuse (41, 42) des Förderers (45) geführten Schubstange (82) und einem Schwenkhebel (83) besteht, der an einem Ende über ein Drehgelenk (86) mit der vorderen Seitenwand (41) des Förderers (45) verbunden ist und in der Bohrung eines Drehbolzens (87) gleitet, der drehbar am freien Ende der Schubstange (82) gelagert ist, während das gegenüberliegende Ende der Schubstange (82) an der Quertraverse (3) angreift.

10. Vorrichtung nach einem der Ansprüche 1 bis 9, dadurch gekennzeichnet, daß die verstellbaren Anschläge (50) am Verschiebeweg des Führungsgeländers (26) oder der Stangen (5) angeordnet sind.

11. Vorrichtung nach einem der Ansprüche 1, 2 oder 10, dadurch gekennzeichnet, daß die Anschläge (50) von der der Einteilschnecke (25) zugewandten Seite des Förderers (45) aus verstellbar sind.

12. Vorrichtung nach einem der Ansprüche 1 bis 11, dadurch gekennzeichnet, daß die Anschlagflächen durch einstellbare Anschlagkörper (90) gebildet werden, die auf einem gemeinsamen, verstellbaren Grundkörper (91) befestigt sind.

13. Vorrichtung nach Anspruch 12, dadurch gekennzeichnet, daß der Grundkörper (91) durch eine horizontal verschiebbar am Gehäuse (41, 42) des Förderers (45) gelagerte Leiste (4) gebildet wird, die die Anschlagkörper (90) für beide Stangen (5) trägt.

14. Vorrichtung nach Anspruch 12, dadurch gekennzeichnet, daß der Grundkörper jeweils als drehbare Trommel ausgebildet ist, die an dem zur Einteilschnecke (25) gerichteten Ende der Stangen (5) drehbar gelagert ist.

15. Vorrichtung nach einem der Ansprüche 12 bis 14, dadurch gekennzeichnet, daß der Grundkörper (91) mit einem Rastelement (21) zur Fixierung der gewünschten Anschlagposition ausgestattet ist.

16. Vorrichtung nach einem der Ansprüche 12 bis 15, dadurch gekennzeichnet, daß die einstellbaren Anschlagkörper (90) als Gewindebolzen (51) ausgebildet sind, die durch Kontermuttern (52) gesichert mit dem Grundkörper (91) verbunden sind.

17. Vorrichtung nach einem der Ansprüche 13 bis 16, dadurch gekennzeichnet, daß am freien Ende der Stangen (5) jeweils eine Anschlagplatte (8) befestigt ist.

18. Vorrichtung nach einem der Ansprüche 14 bis 16, dadurch gekennzeichnet, daß für jeweils eine Trommel eine mit dem jeweiligen Anschlagkörper fluchtende Anschlagstange am Gehäuse (41, 42) des Förderers (45) angebracht ist.

19. Vorrichtung nach einem der Ansprüche 2 bis 18, dadurch gekennzeichnet, daß als Halteelement eine sich mit einem Ende auf das Gehäuse (41, 42) des Förderers (45) und mit ihrem anderen Ende auf dem Schlitten (70) abstützende Feder (80) vorgesehen ist, die den Schlitten (70) gegen die Anschläge (50) drückt.

20. Vorrichtung nach einem der Ansprüche 2 bis 18, dadurch gekennzeichnet, daß als Halteelement eine auf den Schlitten (70) wirkende Klemmeinrichtung vorgesehen ist, die von der der Einteilschnecke (25) zugewandten Seite des Förderers (45) aus bedienbar ist.

21. Vorrichtung nach mindestens einem der Ansprüche 1 bis 20, dadurch gekennzeichnet, daß im Bereich vor der Einteilschnecke (25) im Führungsgeländer (26) ein Sperrstern (95) integriert ist.

22. Vorrichtung zum Einteilen von einspurig auf einem Förderer transportierten Gefäßen mit einer Einteilschnecke und einem auf der der Einteilschnecke gegenüberliegenden Seite des Förderers angeordneten Führungsgeländer, das bezüglich der Transportrichtung im Bereich vor der Einteilschnecke querverstellbar und im Bereich unmittelbar gegenüber der Einteilschnecke sowohl quer - als auch winkelverstellbar ausgeführt ist, insbesondere nach einem der Ansprüche 1 bis 21, dadurch gekennzeichnet, daß die in der Förderebene schwenkbar gelagerte Einteilschnecke (25) an ihrem der Antriebsseite gegenüberliegenden Ende mit einem Anschlaggegenstück (96) ausgestattet ist, das mit verstellbaren Anschlägen (55) zusammenwirkt.

23. Vorrichtung nach Anspruch 22, dadurch gekennzeichnet, daß die Anschläge (55) durch einstellbare Anschlagkörper (90) gebildet werden, die auf einem gemeinsamen, verstellbaren Grundkörper (97) befestigt sind.

24. Vorrichtung nach einem der Ansprüche 22 oder 23, dadurch gekennzeichnet, daß der Grundkörper (97) durch zwei parallel verschiebbar am Gehäuse des Förderers (45) gelagerte Leisten (98, 99) gebildet wird.

25. Vorrichtung nach Anspruch 23 oder 24, dadurch gekennzeichnet, daß der Grundkörper (97) sowohl die einstellbaren Anschlagkörper für das Führungsgeländer (26) als auch für die Einteilschnecke (25) trägt.

26. Vorrichtung nach einem der Ansprüche 23 bis 25, dadurch gekennzeichnet, daß die einstellbaren Anschlagkörper (90) als Gewindebolzen (51) ausgebildet sind, die durch Kontermuttern (52) gesichert mit dem Grundkörper (97) verbunden sind.

27. Vorrichtung nach einem der Ansprüche 22 bis 26, dadurch gekennzeichnet, daß der Grundkörper (97) mit einem Rastelement (21) zur Fixierung der gewünschten Anschlagposition ausgestattet ist.

28. Vorrichtung nach einem der Ansprüche 26 oder 27, dadurch gekennzeichnet, daß das Anschlaggegenstück (96) der Einteilschnecke (25) durch einen schwenkbar am Gehäuse des Förderers (45) gelagerten Exzenter (53) gegen die parallel übereinanderstehenden Gewindebolzen (51) gedrückt wird.

**Claims**

1. Device for spacing containers transported in a single row on a conveyor, having a spacing worm and a guide railing which is arranged on the side of the conveyor located opposite the spacing worm and can be adjusted both transversely and in an angular manner relative to the transport direction, characterised in that the different transverse and angular positions, allocated to certain container sizes, of the guide railing (26) ore established by two stops (50) which are arranged so as to be adjustable at a distance in the transport direction and have a plurality of stop surfaces (90).

2. Device according to Claim 1, characterised in that the guide railing (26) is fastened to a slide (70) which is mounted below and parallel to the conveying plane and whose transverse and angular positions are determined by the adjustable stops (50) and can be secured by holding elements (7, 80).

3. Device according to Claim 2, characterised in that the slide (70) has two parallel rods (5) which are guided in the housing (41, 42) of the conveyor (45).

4. Device according to Claim 3, characterised in that the guide railing (26) is connected via swivel joints (6) to the two rods (5), which are guided in the housing (41, 42) of the conveyor (45) in such a way as to be displaceable independently of one another transversely to the transport direction.

5. Device according to Claim 3, characterised in that the two rods (5) are connected to one another by a cross piece (3) and are guided in the housing (41, 42) of the conveyor (45) in such a way as to be displaceable transversely to the transport direction and if need be tiltable in a plane parallel to the conveying plane.

6. Device according to one of Claims 1 to 5, characterised in that, to adjust the guide railing (26), the latter is connected to an actuating mechanism (84, 85) arranged on the side of the spacing worm (25).

7. Device according to Claims 5 and 6, characterised in that parts (7, 82) of the actuating mechanism (84, 85) act on the cross piece (3).

8. Device according to Claims 2, 6 or 7, characterised in that the holding element and the actuating mechanism (84) are formed by a threaded spindle (7) which is mounted in the housing (41, 42) of the conveyor (45), is connected to the cross piece (3) and is provided with a hand wheel (20) on the side facing the spacing worm (25).

9. Device according to either of Claims 6 or 7, characterised in that the actuating mechanism (85) consists of a push rod (82) guided in the housing (41, 42) of the conveyor (45) and of a pivoted lever (83) which is connected at one end via a swivel joint (86) to the front side wall (41) of the conveyor (45) and slides in the bore of a fulcrum pin (87) which is rotatably mounted at the free end of the push rod (82), while the opposite end of the push rod (82) acts on the cross piece (3).

10. Device according to one of Claims 1 to 9, characterised in that the adjustable stops (50) are arranged in the displacement path of the guide railing (26) or the rods (5).

11. Device according to one of Claims 1, 2 or 10, characterised in that the stops (50) are adjustable from the side of the conveyor (45) facing the spacing worm (25).

12. Device according to one of Claims 1 to 11, characterised in that the stop surfaces are formed by adjustable stop bodies (90) which are fastened to a common, adjustable basic body (91).

13. Device according to Claim 12, characterised in that the basic body (91) is formed by a strip (4) which is mounted in a horizontally displaceable manner on the housing (41, 42) of the conveyor (45) and carries the stop bodies (90) for both rods (5).

14. Device according to Claim 12, characterised in that the basic body is in each case designed as a rotable drum which is rotatably mounted on the end of the rods (5) which is directed towards the spacing worm (25).

15. Device according to one of Claims 12 to 14, characterised in that the basic body (91) is equipped with a catch element (21) for fixing the desired stop position.

16. Device according to one of Claims 12 to 15, characterised in that the adjustable stop bodies (90) are designed as stud bolts (51) which, secured by lock-nuts (52), are connected to the basic body (91).

17. Device according to one of Claims 13 to 16, characterised in that a stop plate (8) is in each case fastened to the free end of the rods (5).

18. Device according to one of Claims 14 to 16, characterised in that a stop rod in alignment with the respective stop body is attached to the housing (41, 42) of the conveyor (45) for one drum each.

19. Device according to one of Claims 2 to 18, characterised in that a spring (80) supported with one end on the housing (41, 42) of the conveyor (45) and with its other end on the slide (70) is provided as holding element, which spring (80) presses the slide (70) against the stops (50).

20. Device according to one of Claims 2 to 18, characterised in that a clamping device acting on the slide (70) is provided as holding element, which clamping device can be operated from the side of the conveyor (45) facing the spacing worm (25).

21. Device according to at least one of Claims 1 to 20, characterised in that an arresting star wheel (95) is integrated in the guide railing (26) in the area in front of the spacing worm (25).

22. Device for spacing containers transported in a single row on a conveyor, having a spacing worm and a guide railing which is arranged on the side of the conveyor located opposite the spacing worm and, relative to the transport direction, is constructed in such a way that it can be transversely adjusted in the area in front of the spacing worm and can be both transversely adjusted and adjusted in an angular manner in the area directly opposite the spacing worm, in particular according to one of Claims 1 to 21, characterised in that the spacing worm (25) pivotably mounted in the conveying plane is equipped at its end opposite the drive side with a stop counterpart (96) which interacts with adjustable stops (55).

23. Device according to Claim 22, characterised in that the stops (55) are formed by adjustable stop bodies (90) which are fastened to a common, adjustable basic body (97).

24. Device according to either of Claims 22 or 23, characterised in that the basic body (97) is formed by two strips (98, 99) mounted on the housing of the conveyor (45) in such a way as to be displaceable in parallel.

25. Device according to Claim 23 or 24, characterised in that the basic body (97) carries the adjustable stop bodies for both the guide railing (26) and the spacing worm (25).

26. Device according to one of Claims 23 to 25, characterised in that the adjustable stop bodies (90) are designed as stud bolts (51) which, secured by lock-nuts (52), are connected to the basic body (97).

27. Device according to one of Claims 22 to 26, characterised in that the basic body (97) is equipped with a catch element (21) for fixing the desired stop position.

28. Device according to either of Claims 26 or 27, characterised in that the stop counterpart (96) of the spacing worm (25) is pressed against the stud bolts (51), disposed in parallel one above the other, by an eccentric (53) pivotably mounted on the housing of the conveyor (45).

**Revendications**

1. Dispositif pour le guidage d'une rangée de conteneurs sur un transporteur, avec une vis sans fin transporteuse et un guide placé du côté du transporteur opposé à la vis sans fin transporteuse, orientable non seulement transversalement, mais aussi angulairement par rapport à la direction de transport, caractérisé en ce que les positions transversales et angulaires du guide (26), adaptées aux tailles précises des conteneurs, sont fixées par deux butées (50), placées à distance réglable dans la direction du transport et avec plusieurs surfaces de butée.

2. Dispositif selon la revendication 1, caractérisé en ce que le guide (26) est fixé sur un support (70), qui est placé au-dessous du plan du transporteur et parallèlement à celui-ci, et dont les positions transversales et obliques sont déterminées par des butées réglables et fixées par des éléments d'arrêt (7, 80).

3. Dispositif selon la revendication 2, caractérisé en ce que le support (70) comporte deux tiges parallèles (5), qui sont guidées à l'intérieur du carter (41, 42) du transporteur (45).

4. Dispositif selon la revendication 3, caractérisé en ce que le guide (26) est lié par l'intermédiaire d'une articulation à charnière avec les deux tiges (5), qui sont guidées indépendamment l'une de l'autre dans le carter (41, 42) du transporteur.

5. Dispositif selon la revendication 3, caractérisé en ce que les deux tiges (5) sont liées l'une à l'autre par une entretoise transversale (3) et sont guidées transversalement à la direction de transport et, en cas de besoin, dans un plan parallèle au plan du transporteur avec possibilité de basculement, dans l'enceinte du transporteur (45).

6. Dispositif selon l'une des revendications 1 à 5, caractérisé en ce que, pour le réglage du guide (26), celui-ci est en liaison avec un dispositif de commande (84, 85) placé sur le côté de la vis sans fin transporteuse (25).

7. Dispositif selon les revendications 5 et 6, caractérisé en ce que des éléments (7, 82) du dispositif de commande (84, 85) viennent en prise sur l'entretoise transversale (3).

8. Dispositif selon les revendications 6 ou 7, caractérisé en ce que l'élément d'arrêt et le dispositif de commande (84) sont constitués par un mandrin fileté (7) placé dans l'enceinte (41, 42) du transporteur (45), lié à l'entretoise transversale (3), et muni d'un volant à main (20) sur la paroi tournée vers la vis sans fin transporteuse (25).

9. Dispositif selon les revendications 6 ou 7, caractérisé en ce que le dispositif de commande (85) est constitué par une bielle (82) guidée dans le carter (41, 42) du transporteur (45) et par un levier pivotant (83), lié à une extrémité à la paroi latérale (41) du transporteur (45) par l'intermédiaire d'une articulation à charnière (86), et coulissant dans le perçage d'un tourillon (87), tournant à l'extrémité libre de la bielle (82), alors que l'extrémité opposée de la bielle vient en prise sur l'entretoise transversale (3).

10. Dispositif selon l'une des revendications 1 à 9, caractérisé en ce que les butées réglables (50) sont placées sur la trajectoire du guide (26) ou des tiges (5).

11. Dispositif selon l'une des revendications 1, 2 ou 10, caractérisé en ce que les butées (50) sont réglables à partir du côté du transporteur (45) tourné vers la vis sans fin transporteuse (25).

**12.** Dispositif selon l'une des revendications 1 à 11, caractérisé en ce que les surfaces de butée sont constituées par des corps de butée (90) réglables, fixés sur bâti (91) réglable commun.

**13.** Dispositif selon la revendication 12, caractérisé en ce que le bâti (91) est constitué par une tringle (4) mobile horizontalement, placée sur l'enceinte (41, 42) du transporteur (45), et qui porte les corps de butée (50) pour les deux tiges (5).

**14.** Dispositif selon la revendication 12, caractérisé en ce que le bâti est toujours constitué par un tambour rotatif, placé à l'extrémité des tiges (5) orientée vers la vis sans fin transporteuse.

**15.** Dispositif selon l'une des revendications 12 à 14, caractérisé en ce que le bâti (91) est muni d'un élément d'arrêt (21) pour la fixation de la position de butée voulue.

**16.** Dispositif selon l'une des revendications 12 à 15, caractérisé en ce que les corps de butée réglable (90) sont constitués par des boulons filetés (51), liés au bâti (91) avec blocage par des contre-écrous (52).

**17.** Dispositif selon l'une des revendications 13 à 16, caractérisé en ce qu'à l'extrémité libre des tiges (5), il est à chaque fois fixé une plaque de butée (8).

**18.** Dispositif selon l'une des revendications 14 à 16, caractérisé en ce que pour chaque tambour, il existe une tige de butée alignée avec chaque corps de butée sur le carter (41, 42) du transporteur (45).

**19.** Dispositif selon l'une des revendications 12 à 18, caractérisé en ce qu'il est prévu comme élément d'arrêt un ressort (80) appuyé à une extrémité sur le carter (41, 42) du transporteur (45) et à l'autre extrémité sur le support (70), et qui appuie le support (70) contre les butées (50).

**20.** Dispositif selon l'une des revendications 12 à 18, caractérisé en ce qu'il est prévu comme élément d'arrêt un dispositif de blocage agissant sur le support (70), et qui est utilisable à partir du côté du transporteur opposé à la vis sans fin transporteuse (25).

**21.** Dispositif selon au moins une des revendications 1 à 20, caractérisé en ce qu'une étoile d'arrêt (95) est intégrée dans la guide de guidage (26) dans la zone en amont de la vis sans fin transporteuse (25).

**22.** Dispositif pour le guidage d'une rangée de conteneurs sur un transporteur avec une vis sans fin transporteuse et un guide placé sur le côté du transporteur opposé à la vis sans fin transporteuse qui, vis à vis de la direction de transport, est guidé avec réglage transversale dans la zone en amont de la vis sans fin transporteuse et non seulement transversale, mais aussi angulaire dans la zone opposée à la vis sans fin transporteuse, en particulier conformément aux revendications 1 à 21, caractérisé en ce que la vis sans fin transporteuse, placée de manière orientable dans le plan du transporteur, est munie à l'extrémité opposée au côté de l'entraînement d'une contre-butée (96) qui agit en même temps que les butées réglables (55).

**23.** Dispositif selon la revendication 22, caractérisé en ce que les butées (55) sont constituées par des corps de butée réglables (90), fixées sur un bâti (97) commun réglable.

**24.** Dispositif selon la revendication 22 ou 23, caractérisé en ce que le bâti (97) est constitué par deux tringles parallèles (98, 99) mobiles, sur le carter du transporteur (45).

**25.** Dispositif selon la revendication 23 ou 24, caractérisé en ce que le bâti (97) porte les corps de butée réglables non seulement pour le guide (26), mais aussi pour la vis sans fin transporteuse (25).

**26.** Dispositif selon l'une des revendications 23 à 25, caractérisé en ce que les corps de butée réglables (90) sont constitués par des boulons filetés (51), liés au bâti (97) avec blocage par contre-écrous (52).

**27.** Dispositif selon l'une des revendications 22 à 26, caractérisé en ce que le bâti (97) est muni d'un élément d'arrêt pour la fixation de la position de butée voulue.

**28.** Dispositif selon l'une des revendications 26 ou 27, caractérisé en ce que la contre-butée (96) de la vis sans fin transporteuse (25) est appuyée contre les boulons filetés (51) parallèles et superposés au moyen d'un excentrique (53) orientable placé sur le carter du transporteur (45).

Fig.1

Fig.2

EP 0 315 129 B1

Fig.3

Fig.4

Fig.5

EP 0 315 129 B1

Schnitt C-D

Fig.6

Fig.7

E

25

6

38

96

37

97

53

43 55 34 33 14 16 99 8 50 34 21 33 98 1 34 8 50 33 36

F

EP 0 315 129 B1

18

Schnitt E - F

Fig.8